# EUROPEAN PATENT SPECIFICATION

(11) **EP 3 679 512 B1**
(45) Date of publication and mention of the grant of the patent: **30.08.2023**
(21) Application number: 18759746.3
(22) Date of filing: 31.07.2018
(51) Int. Cl.: G06K 7/10

(54) **ELECTRONIC READER**
ELEKTRONISCHES LESEGERÄT
LECTEUR ÉLECTRONIQUE

(30) Priority: 07.09.2017 AU 2017903617
(43) Date of publication of application: 15.07.2020
(73) Proprietor: Sato Holdings Kabushiki Kaisha, Tokyo 153-0064 (JP)
(72) Inventor: GREEN, Daron, St Peters, New South Wales 2044 (AU)
(74) Representative: Grünecker Patent- und Rechtsanwälte PartG mbB
(86) International application number: PCT/IB2018/055699
(87) International publication number: WO 2019/048944

(56) References cited:
- WO-A2-2007/024339
- US-A1- 2006 022 797
- US-A1- 2006 163 350
- US-A1- 2009 096 611
- US-A1- 2009 160 638
- US-A1- 2012 105 215
- US-B2- 7 733 230

## Description

### Technical Field

The present disclosure broadly relates to inventory checking of electronically tagged items, and, more particularly, a non-limiting embodiment relates to an inventory tracking system and trolley.

### Background

Inventory checking labelled items is typically done using, for example, barcodes that are scanned using a barcode scanner. Shelved items can either be scanned on the shelves using a hand-held scanner, or may be placed on or moved across a scanning surface.

Radio-frequency identification (RFID) tags can also be used to label items, in which case an RFID reader is used to interrogate the RFID tags, and information retrieved from the tags is then used to update the inventory. Near field low and high frequency RFID readers can read near field tags that are typically within about 30cm of the reader. Near field tags are typically passive or semi-passive tags. Far field ultrahigh frequency (UHF) RFID readers can be used to read tags further away, for example on shelved items where a reader is passed along a shelf. Far field tags are typically passive or semi-passive tags but may be active tags.

US 7,733,230 describes a mobile readpoint system that has a repositionable antenna structure so that the system can be implemented in, for example, a shopping centre, grocery store, factory, or a warehouse where many items may be stacked on shelves. The antenna structure includes a vertically expandable antenna tower and vertically positioned antennas.

US2006/0163350 describes an RFID-enabled cart with an RFID antenna operable to communicate with an RFID tag at a distance greater than five feet so that tags can be read at a distance as the cart moves past the tags. The cart can include two antennas attached on either side of the cart to allow the two antennas to be oriented in opposite directions and in a vertical orientation, thereby enabling the collection of data at a greater distance.

US2009/0096611 describes a mobile RFID antenna system aimed to solve the problem of penetrating stacked items to improve the accuracy of inventory tracking. The mobile system has one or more fixed antennas directed towards one or more sides of the mobile system, and also a handheld antenna so that the user can reach items that are stacked above or behind other items.

US2009/0160638 describes a portable RFID reader system that switches between a lobe field arrangement and a null field arrangement in order to determine the location of an RFID-tagged object.

WO2007/024339 describes an RFID system that solves the problem of tracking data-tagged carriers associated with individual articles that do not have data-tags so that tracking the individual articles may be inaccurate. The system is applied to a transporter that transports carriers, and determines the presence of the carriers using RFID technology, but records the removal of items within the carriers based on a user input or a confirmation sensor input.

US2006/0022797 describes the use of data to phase modulate a carrier signal to have side bands lower in amplitude than the carrier. The modulated signal includes the sum of the carrier signal and an attenuated carrier signal which is quadrature phase modulated with the data signal. This form of modulation is referred to as phase jitter modulation PJM, and when applied to RFID systems, it is referred to as "PJM RFID".

US2012/105215A1 discloses an inventory tracking system which comprises the features of the preamble of claim 1.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

### Summary

The present invention is defined by the features of claim 1. Further features and advantages of embodiments of the present invention are the subject matter of dependent claims.

The one or more electronically labelled items may be labelled using Near Field RFID tags, and the electronic reader may be a Near Field RFID reader.

The electronic reader of any of the embodiments may be a high frequency and/or Phase Jitter Modulation (PJM) RFID reader.

These and other aspects and features of non-limiting embodiments will now become apparent to those skilled in the art upon review of the following description of specific non-limiting embodiments in conjunction with the accompanying drawings. Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of Drawings

Non-limiting embodiments of the disclosure are now described by way of example with reference to the accompanying drawings in which:-
Fig. 1 is a side view of one non-limiting embodiment of an inventory tracking system;
Fig. 2 is a side view of another non-limiting embodiment of an inventory tracking system;
Fig. 3 is a perspective view of the inventory tracking system of Fig. 2; and
Fig. 4 schematically illustrates a reading zone of the inventory tracking system of Fig. 2.

In the drawings, like reference numerals designate similar parts

### Detailed Description

RFID readers have an antenna that produces an RF field which, when brought close enough to an RFID tag, will couple with the tag's antenna depending upon the tag's orientation relative to the RF field. Typically, readers are able to couple with many tags at once, however reading all of the tags reliably may be problematic.

Near a transmitting antenna interference effects in the transmitted wave predominate. This area is referred to as the "Near Field", or the "Fresnel region". The "Far Field", or the "Fraunhofer region", refers to a region further away from a transmitting antenna. The power density in the Near Field does not decrease monotonically as the distance from the antenna increases, but follows an oscillatory pattern. In the Far Field, on the other hand, a plane wave exists.

The boundary between the two regions is defined as being where the intrinsic wave impedance of the Near Field equals the intrinsic wave impedance of the Far Field. The intrinsic wave impedance in the far field is that of a plane wave, i.e. 120π or 377Ω. However, in the Near Field the intrinsic wave impedance depends on the type of antenna design used (loop/coil or dipole/monopole).

At a distance of λ/2π the Near Field intrinsic wave impedance equals 120 π regardless of antenna design, so that the Near Field is defined as being within a distance of λ/2π for wire antennas where the wave impedances for both fields are equal to 120π. Therefore, if an RFID system operates at a distance less than λ/2π it is operating in the Near Field.

Long range Far Field antennas are typically dipoles which have a highly anisotropic Near Field. Far Field reader antennas produce a radiating electromagnetic field which will couple to the tag's antenna provided the tag's antenna is aligned with the polarisation direction of the field. Only two polarisation directions are possible with a radiating field and this may be problematic where a tag may be oriented in any of three coordinate directions. One disadvantage of Far Field tags is that the tags cannot work reliably in three orthogonal directions unless either multiple reader antennas are used for reading or the tag itself has multiple independent antennas.

In contrast, short range Near Field readers typically have coil antennas that produce a magnetic field which, when brought close enough to an RFID tag, will couple with the tag's coil antenna depending upon the tag's coil antenna's orientation relative to the magnetic field. Typically, Near Field tags have to be in the correct orientation relative to the reader antenna in order to be interrogated by the reader.

When a conventional reader is used and multiple tags are presented to be read at the same time, it is typically not possible to ensure the identification of all tags unless the orientation of each of the tags is adjusted to be correctly aligned to the reader antenna. This is particularly inconvenient when a large group of tags is held in one container or manually presented with all to be read by a reader at the same time.

For High Frequency (HF) systems that operate at 13.56MHz the wavelength is 22.12m and λ/2π = 3.52m. The magnetic field (H field) in an HF system decreases rapidly with distance and operation beyond 1m is normally not possible because the H field strength is too weak. The system described herein is an HF system that typically operates at a distance of less than a meter, for example under 0.5m, which is well within the Near Field region. In some embodiments, the system described herein is a Phase Jitter Modulation (PJM) HF system operating at 13.56MHz.

In contrast, for Ultra High Frequency (UHF) systems the frequency is between 800MHz and 900MHz with a wavelength of between 0.333 and 0.375m. The λ/2π distance therefore only ranges between about 53mm and 59.6mm (about 2 inches). Beyond a distance of 2 inches a UHF system is operating in the Far Field. The Near Field for UHF systems therefore provides a very limited depth range within which to read tags, and is therefore not practical for a scenario where several tagged items are placed inside a box, for example. In addition, UHF antennas can generally not be implemented in a multiple antenna fashion for 3D operation because the stray capacitance between antennas is larger than the tuning capacitance of the loop at UHF.

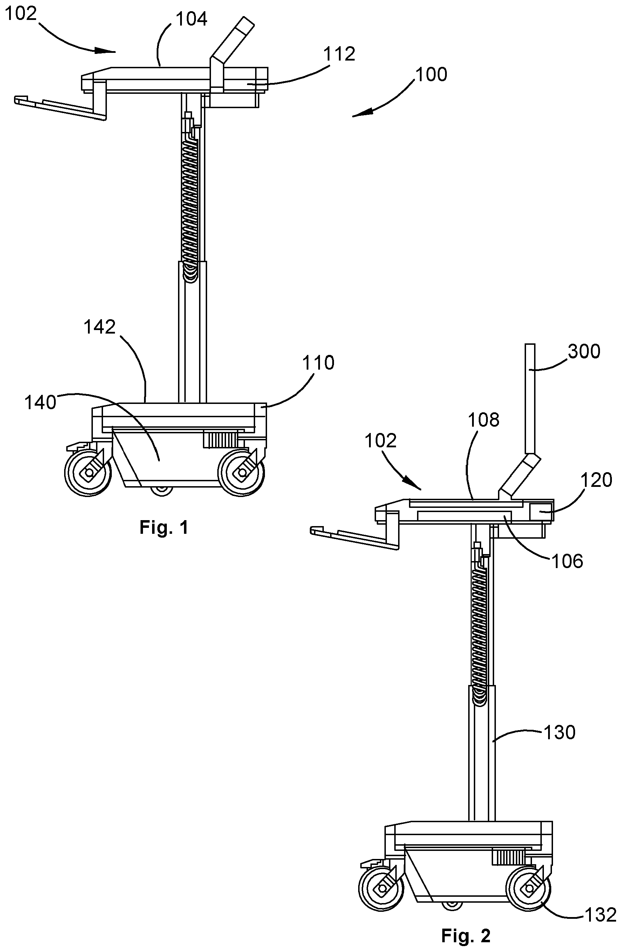

Referring to Fig. 1 of the drawings, a non-limiting embodiment of an inventory tracking system 100 is shown. The inventory tracking system 100 has a reading zone 102 configured to receive one or more electronically labelled items on a horizontal reading surface 104. As illustrated in more detail in Fig. 2 of the drawings, the system 100 has an electronic reader 106 that includes at least one reader antenna 108 associated with the reading zone 102. In some non-limiting embodiments, the reader antenna 108 is omnidirectional and the electronic reader 106 is configured to read electronic labels with random orientations.

The inventory tracking system 100 has a displaceable structure that is displaceable with respect to an inventory substrate. The displaceable structure may be, for example, in the form of wheeled shelving such as a cart or trolley 110 as illustrated in the drawings. The inventory substrate (not illustrated in the drawings) is a zone or area where inventory is located or stored, for example shelving containing items that include the electronically labelled items to be tracked by the inventory.

The electronic reader 106 has a transmitter, receiver, processor, memory and other reader electronics. Connected to the electronic reader 106 is a communication interface 120 configured for wired and/or wireless communication with a remote computing system. When labelled items are read by the reader 106, data relating to the items (for example item identities) are saved in the reader memory and/or communicated to the remote computing system. In some non-limiting embodiments the item identities are saved on the reader memory during a stocktaking cycle, and after the stocktaking cycle (or at intervals during the stocktaking cycle), the inventory stored on the reader memory is communicated to the remote computing system via wireless communication such as Wi-Fi. In some non-limiting embodiments the communication interface 120 is connected, for example after stocktaking, to the remote computing system via a wired connection for downloading the stored inventory from the reader memory to the remote computing system.

The electronic reader 106 has at least one reader antenna 108 associated with the reading zone 102. The reader antenna 108 is an RFID antenna configured to interrogate RFID tags used for electronically labelling the items in the inventory. In some non-limiting embodiments the reader antenna 108 includes one or more antenna coils, and when interrogating electronic labels in the form of RFID tags placed in the reading zone 102, the antenna coils couple with RFID tag coils in order to retrieve tag data from the RFID tags. In some non-limiting embodiments the reader antenna 108 includes two or more interleaved and/or overlapped antenna coils in order to provide three-dimensional antenna reading capability as described in International Patent Application No. PCT/AU2006/001318 published as WO2007/030861 on 22 March 2007, the entire content of which is incorporated herein by reference.

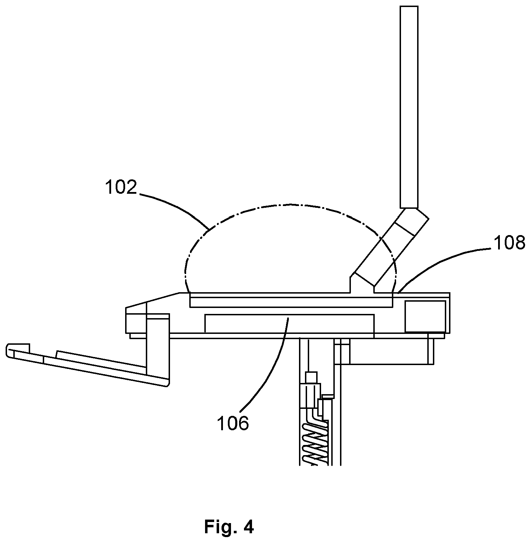

With two or more interleaved and/or overlapped antenna coils that function across the reading surface 104, the reader antenna 108 is an omnidirectional antenna. Accordingly, the reading zone 102 is a three dimensional reading zone as illustrated in Fig. 4 of the drawings, and electronic labels with random orientations relative to the reader antenna 108 can be read within the reading zone 102

The reader antenna 108 is associated with the reading zone 102. As described above, the configuration of the reader antenna 108 determines the size and shape of the reading zone 102. The electromagnetic field(s) caused by the one or more antenna coils define the reading zone 102. In some non-limiting embodiments the reading zone 102 may be configurable, and the electronic reader 106 may be configured to be able to vary the power to one or more of the antenna coils. In this way, the reader 106 is configured to alter the dimensions of the reading zone 102 by switching individual antenna coils and/or controlling antenna coil power thereby changing the resultant electromagnetic field(s) caused by the antenna coils. This may be automatic (e.g. preprogrammed), or controlled by a user via a user interface.

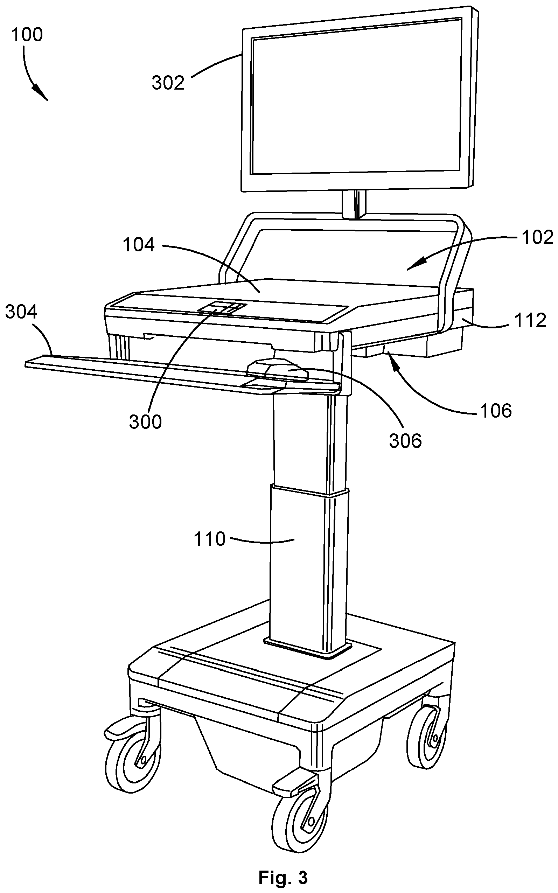

As shown in Fig. 3 of the drawings, the inventory tracking system 100 includes a user interface 300. In some non-limiting embodiments the user interface 300 includes one or more buttons, keys, touchpads, dials etc. to control, e.g. to start and stop, a scan. In some non-limiting embodiments, as illustrated in Fig. 2-4 of the drawings, the user interface 300 may include one or more additional I/O devices such as a screen 302, keyboard 304, mouse 306, etc. The additional I/O devices may be used to improve the user experience, ease of use, and/or to provide additional functionality, for example: control features for controlling the scans (e.g. altering the dimensions of the reading zone by switching individual antenna coils and/or controlling antenna coil power), inventory features for updating and managing the inventory, and/or communication features for managing the wired and/or wireless communication with the remote computing system.

Alternatively as shown in Fig. 2 the inventory tracking system 100 includes a user interface 300. The user interface may be a tablet PC with a touch screen for both display and user input and a wireless interface such as Wi-Fi for communication with a remote computer system.

The inventory tracking system 100 has a displaceable structure, e.g. a moveable body or frame 130 with wheels 132 as illustrated. In other non-limiting embodiments, the moveable body may be in the form of a container moveably fixed to a rail on a shelf. It will be appreciated that any manner of moving the body of the system relative to the items that are to be tracked in the inventory may be used.

Having a structure that is displaceable or moveable with respect to the items advantageously provides the system 100 with flexibility because the system 100 can be used anywhere: in a storeroom, in a warehouse, in a hospital, in a shopfront, etc. In some non-limiting embodiments the moveable body is in the form of a trolley 110 with a flat top reading surface 104, and as the trolley 110 is wheeled along one or more shelves containing items, individual or sets of items are placed on the reading surface 104. Labels that lie within the reading zone 102 are interrogated by the electronic reader 106, and item identities thus retrieved are used to update the inventory.

In some non-limiting embodiments the flexibility provided by a mobile structure is further increased by including a power source in the system 100, for example one or more batteries. In some non-limiting embodiments a battery 140 is housed within a base 142 of the trolley 110, and the battery 140 provides power to the electronics: the reader 106, the reader antenna 108, the user interface 300, etc.

The horizontal reading surface 104 may be a table top, drawer, shelf, or any other substantially horizontal surface associated with the inventory tracking system 100 that is configured to receive the electronically labelled items. For example, the horizontal reading surface 104 may include a top surface of the displaceable structure, such as a shelf 112 of the trolley 110. In other non-limiting embodiments the reading surface may be a different shape or orientation, for example adapted to match a configuration of items in the inventory.

Advantageously, a simple and open horizontal reading surface is easy and fast to use. A user can simply place a box of items on the surface 104, in any orientation, the reader 106 scans the items within the reading zone 102, and the user can remove the box and replace it with another one to scan.

Advantageously, the inventory tracking system described herein is flexible because the system is mobile and has three-dimensional reading capability. Advantageously the system is easy and fast to use because of the simple horizontal reading surface on which individual or groups of items can easily be placed, and because the three-dimensional reading capability allows tags to be placed within the reading zone in any orientation. Advantageously the system uses near field RFID technology resulting in improved accuracy when compared to far field RFID inventory systems.

It is noted that the foregoing outlines some of the more pertinent non-limiting embodiments. It will be clear to those skilled in the art that modifications to the disclosed non-limiting embodiments can be effected without departing from the scope thereof. As such, the described non-limiting embodiments ought to be considered to be merely illustrative of some of the more prominent features and applications. Other beneficial results can be realized by applying the non-limiting embodiments in a different manner or modifying them in ways known to those familiar with the art. The mixing and matching of features, elements and/or functions between various non-limiting embodiments is expressly contemplated herein so that one of ordinary skill in the art would appreciate from this disclosure that features, elements and/or functions of one embodiment may be incorporated into another embodiment, unless described otherwise above. Although the description is made for particular arrangements and methods, the intent and concept thereof may be suitable and applicable to other arrangements and applications.

## Claims

1. An inventory tracking system (100) comprising:
a mobile structure (110) with a reading zone (102) configured to receive one or more electronically labelled items on a horizontal reading surface (104); and
a near field electronic reader (106) comprising at least one omnidirectional reader antenna (108) associated with the reading zone (102),
wherein the electronic reader (106) is configured to read electronic labels of the one or more electronically labelled items placed on the horizontal reading surface (104) with random orientations,
wherein the reading zone (102) associated with the reader antenna (108) is a three-dimensional reading zone that operates up to a distance of 0.5m,
**characterized in that**
the three-dimensional reading zone is configurable by one or more of: varying the power to one or more antenna coils of the at least one omnidirectional reader antenna, and switching individual antenna coils, thereby altering dimensions of the three-dimensional reading zone; and
the inventory tracking system further comprises a user interface, and the reading zone (102) is configurable via the user interface.

2. The inventory tracking system of claim 1 wherein the mobile structure (110) is a wheeled trolley.

3. The inventory tracking system of any one of the preceding claims wherein the electronic reader (108) is a high frequency electronic reader and therefore reads near field tags that are within 0.5m of the electronic reader.

4. The inventory tracking system of any one of the preceding claims, wherein the electronic reader (106) is controllable via the user interface.

5. The inventory tracking system of any one of the preceding claims wherein the electronic reader is a Phase Jitter Modulation, PJM, RFID reader.

## Patentansprüche

1. Inventarnachverfolgungssystem (100) umfassend:
eine mobile Struktur (110) mit einer Lesezone (102), eingerichtet, um ein oder mehrere elektronisch etikettierte Gegenstände auf einer horizontalen Leseoberfläche (104) aufzunehmen, und
eine elektronische Nahfeld-Leseeinrichtung (106), umfassend wenigstens eine Rundstrahl-Leseantenne (108), die mit der Lesezone (102) assoziiert ist,
wobei die elektronische Leseeinrichtung (106) eingerichtet ist, um elektronische Etiketten des einen oder der mehreren elektronisch etikettierten, auf der horizontalen Leseoberfläche (104) mit zufälligen Orientierungen platzierten Gegenstände zu lesen,
wobei die mit der Leseantenne (108) assoziierte Lesezone (102) eine dreidimensionale Lesezone ist, die bis zur einen Abstand von 0,5m aufwärts (Original: up to a distance of 0.5m) funktioniert,
**dadurch gekennzeichnet, dass**
die dreidimensionale Lesezone konfigurierbar ist durch eines oder mehrere von: Variieren der Leistung zu einer oder mehreren Antennenspulen der wenigstens einen Rundstrahl-Leseantenne, und Schalten individueller Antennenspulen, dadurch Ändern von Dimensionen der dreidimensionalen Lesezone,
das Inventarnachverfolgungssystem weiterhin eine Benutzerschnittstelle umfasst und die Lesezone (102) über die Benutzerschnittstelle konfigurierbar ist.

2. Inventarnachverfolgungssystem nach Anspruch 1, wobei die mobile Struktur (110) ein Rollwagen ist.

3. Inventarnachverfolgungssystem nach einem der vorhergehenden Ansprüche, wobei die elektronische Leseeinrichtung (108) eine elektronische Hochfrequenz-Leseeinrichtung ist und deshalb Nahfeldetiketten, die sich innerhalb von 0,5m von der elektronischen Leseeinrichtung befinden, liest.

4. Inventarnachverfolgungssystem nach einem der vorhergehenden Ansprüche, wobei die elektronische Leseeinrichtung (106) über die Benutzerschnittstelle konfigurierbar ist.

5. Inventarnachverfolgungssystem nach einem der vorhergehenden Ansprüche, wobei die elektronische Leseeinrichtung eine Phasenschwankungs-Modulations- (Original: Phase Jitter Modulation), PJM, -RFID-Leseeinrichtung ist.

## Revendications

1. Système de suivi d'inventaire (100) comprenant :
une structure mobile (110) avec une zone de lecture (102) configurée pour accueillir un ou plusieurs éléments électroniquement étiquetés sur une surface de lecture horizontale (104) ; et
un lecteur électronique en champ proche (106) comprenant au moins une antenne de lecteur omnidirectionnelle (108) associée à la zone (102),
dans lequel le lecteur électronique (106) est configuré pour lire des étiquettes électroniques de l'un ou plusieurs éléments électroniquement étiquetés placés sur la surface de lecture horizontale (104) avec des orientations aléatoires,
dans lequel la zone de lecture (102) associée à l'antenne de lecteur (108) est une zone de lecture tridimensionnelle qui fonctionne à une distance de 0,5 m,
**caractérisé en ce que**
la zone de lecture tridimensionnelle est configurable par un ou plusieurs de : variation de la puissance d'une ou plusieurs bobines d'antenne de l'au moins une antenne de lecteur omnidirectionnelle, et
commutation de bobines d'antenne individuelles, modifiant ainsi des dimensions de la zone de lecture tridimensionnelle ; et
le système de suivi d'inventaire comprend en outre une interface d'utilisateur, et la zone de lecture (102) est configurable via l'interface d'utilisateur.

2. Le système de suivi d'inventaire de la revendication 1 dans lequel la structure mobile (110) est un chariot sur roues.

3. Le système de suivi d'inventaire de l'une quelconque des revendications précédentes dans lequel le lecteur électronique (108) est un lecteur électronique hautes fréquences et lit donc des étiquettes en champ proche qui sont à moins de 0,5 m du lecteur électronique.

4. Le système de suivi d'inventaire de l'une quelconque des revendications précédentes, dans lequel le lecteur électronique (106) est contrôlable via l'interface d'utilisateur.

5. Le système de suivi d'inventaire de l'une des revendications précédentes dans lequel le lecteur électronique est un lecteur RFID à modulation à gigue de phase, PJM (Phase Jitter Modulation).
